# EUROPÄISCHE PATENTSCHRIFT

(11) **EP 1 385 647 B1**
(45) Veröffentlichungstag und Bekanntmachung des Hinweises auf die Patenterteilung: **13.10.2004**
(21) Anmeldenummer: 02769139.3
(22) Anmeldetag: 07.05.2002
(51) Int. Cl.: B21C 1/30, B65H 51/14, F16G 13/04

(54) **KETTENZIEHMASCHINE ZUM KONTINUIERLICHEN ZIEHEN VON ZIEHGUT**
CHAIN DRAWING MACHINE FOR CONTINUOUSLY DRAWING DRAWN ITEMS
MACHINE D'ETIRAGE A CHAINES POUR L'ETIRAGE EN CONTINU D'UNE MATIERE A ETIRER

(30) Priorität: 08.05.2001 DE 10122340
(43) Veröffentlichungstag der Anmeldung: 04.02.2004
(73) Patentinhaber: Kalkenings, Peter, 52080 Aachen (DE)
(72) Erfinder: Kalkenings, Peter, 52080 Aachen (DE)
(74) Vertreter: Moser, Jörg Michael, Dipl.-Ing.
(86) Internationale Anmeldenummer: PCT/EP2002/005017
(87) Internationale Veröffentlichungsnummer: WO 2002/090013

(56) Entgegenhaltungen:
- EP-A- 0 548 723
- EP-A- 0 791 719
- DE-B- 1 067 674
- DE-C- 19 844 304

## Beschreibung

Die Erfindung betrifft eine Kettenziehmaschine zum kontinuierlichen Ziehen von Ziehgut, insbesondere stangen- oder rohrförmigen Ziehgut, mit einem Ziehwerkzeug und mit einer dem Ziehwerkzeug zugeordneten Ziehaggregat, das mindestens zwei endlos umlaufende, antreibbare und mit Klemmbacken für das Ziehgut versehene Ziehketten aufweist, die zum Ergreifen des Ziehgutes über Führungselemente gegeneinander anstellbar sind und somit eine Ziehstrecke für das Ziehgut bilden.

Es ist allgemein bekannt, dass Ziehmaschinen für stangen- oder profilförmiges Ziehgut Ziehaggregate aufweisen, die mindestens zwei Ziehschlitten oder mindestens zwei umlaufende Ziehketten aufweisen. An den Ziehschlitten oder den Ziehketten sind der Außenkontur des zu ziehenden Ziehgutes angepasste Klemmbacken angeordnet, die zur Reduzierung des Materialquerschnitts des Ziehgutes das Ziehgut unmittelbar an ein Ziehwerkzeug der Ziehmaschine anschließend klemmen und für den Ziehvorgang mitnehmen. Bei den Ziehaggregaten mit Ziehschlitten kommen insgesamt vier profilierte Klemmbacken zum Klemmen des Ziehgutes zum Einsatz, wobei Ziehaggregate mit umlaufenden Ketten eine hohe Anzahl von Klemmbacken (etwa 50 Backen pro Kette) aufweisen. Die Ziehschlitten arbeiten intermittierend, wohingegen die Ziehketten kontinuierlich umlaufend arbeiten. Die Ziehschlitten ziehen abwechselnd am Ziehgut. Während der erste Ziehschlitten im Einsatz ist, wird der zweite zurückgefahren und wieder neu auf Ziehgeschwindigkeit beschleunigt. Der zweite Ziehschlitten übernimmt das Ziehgut kurz bevor der erste Ziehschlitten am Ende seiner Ziehbahn ist und abgebremst werden muss. Nach der Übernahme des Ziehguts durch den zweiten Ziehschlitten wird der erste Schlitten abgebremst, zurückgefahren und wieder auf Ziehgeschwindigkeit beschleunigt, bevor dieser das Ziehgut, kurz bevor der zweite Ziehschlitten am Ende seiner Ziehbahn ist, wieder übernimmt. Durch die intermittierende Arbeitsweise der Ziehschlitten entstehen hohe interne Kräfte in den Ziehschlitten, wodurch nur eine begrenzte Ziehgeschwindigkeit erreicht werden kann. Üblicherweise werden mit derartigen Ziehmaschinen Geschwindigkeiten von 100 bis 150 m/min erreicht.

Aus der europäischen Patentanmeldung EP 0 548 723 A1 ist eine Kettenziehmaschine zum kontinuierlichen Ziehen von Ziehgut bekannt. Diese Kettenziehmaschine besteht im wesentlichen aus einem Ziehwerkzeug und einem sich hieran anschließenden Ziehaggregat mit zwei endlos über Umlenkräder umlaufenden und angetriebenen Ziehketten. Ein Teil der Ziehketten sind die Klemmbacken für das zu ziehende Ziehgut, welche auch die Funktion einer Kettenlasche übernehmen. Die zwei Ziehketten sind derart zueinander angeordnet, dass eine Ziehstrecke (Klemmstrecke) für das durch das Ziehwerkzeug zu ziehende Ziehgut bilden, entlang der die Ziehketten und somit auch deren Klemmbacken parallel zu einander verlaufen. Die Ziehketten werden über die Klemmbacken jeweils von einem umlaufenden Rollenband, welches auf einer Führungsschiene abläuft, auf der dem Ziehgut abgewandten Seite unterstützt. Die Führungsschienen sind jeweils anstellbar, so dass die Klemmbacken aufeinander zu bewegbar sind, um das Ziehgut hier zwischen einzuklemmen und im Bereich der Ziehstrecke mitzunehmen. Mit derartigen Ziehmaschinen werden üblicherweise Ziehgeschwindigkeiten von etwa 200 bis 300m/min erreicht.

Die Ziehketten sind jeweils in einer Sonderbauform ausgebildet, die auf einer einzigen Rollenkette aufbaut. Die Ziehkette besteht im wesentlichen aus äußeren seitlichen Kettenlaschen, die in üblicher Weise über Bolzen gelenkig miteinander verbunden sind. Anstatt der bei einer Rollenkette üblichen Anordnung einer einzigen Rollenbuchse auf dem Bolzen zwischen den äußeren seitlichen Kettenlaschen ist hier die Rollenbuchse in eine rechte und linke Rollenbuchse geteilt, die jeweils an die äußeren seitlichen Kettenlaschen von innen angrenzt. Zwischen den rechten und linken Rollenbuchsen sind auf dem gemeinsamen Bolzen eine weitere als Zurückhaltelasche bezeichnete innere Kettenlasche, die ebenfalls in Form einer Kettenlasche ausgebildete Klemmbacke und eine weitere innere Zurückhaltelasche angeordnet. In Bezug auf die in Umlaufrichtung der Ziehketten gesehen aufeinander folgenden Bolzen sind die beiden inneren Zurückhaltelaschen und die Klemmbacken so mit den Bolzen verbunden, dass diese wiederum einen Kettenverband bilden. Die beiden inneren Zurückhaltelaschen und die Klemmbacken nehmen somit neben den äußeren Kettenlaschen auch einen Teil der auf die Ziehkette einwirkenden Ziehkräfte auf.

Im Bereich der als Kettenräder ausgebildeten Umlenkräder für die Ziehketten werden die Rollenbuchsen für eine formschlüssige Übertragung der Antriebskräfte von den Zähnen der Kettenräder ergriffen. Um im Bereich der Ziehstrecke die Reibungsverluste zwischen der Ziehkette und den Führungselementen zu vermindern, werden die Ziehketten gleitreibungsfrei über ein parallel zu jeder Ziehkette umlaufendes Rollenband auf den Führungsschienen abgestützt. Hierfür weisen die dem Ziehgut abgewandten Innenseiten der Klemmbacken eine glatte Abrollfläche auf. Das Rollenband zwischen den Klemmbacken und der Führungsschiene besteht aus einzelnen Zylinderrollen, die mittels Laschen untereinander verbunden sind. Gleitscheiben sind jeweils rechts und links neben den Rollenangeordnet und dienen zur Zentrierung des Rollenbandes in Bezug auf die Klemmbacken und die Führungsschiene. In Umlaufrichtung der Ziehkette gesehen wird das Rollenband in Bezug auf die Klemmbacke abwechselnd von den Innenseiten der inneren Zurückhaltelaschen und von einer entsprechend profilierten Ausbildung der glatten Abrollfläche der Kettenlaschen geführt. Die inneren Zurückhaltelaschen haben hierbei die Aufgabe, in Bezug auf die Führung des Rollenbandes die Abstandsspalte zwischen den glatten Abrollflächen der Kettenlaschen zu überbrücken.

Bei einer derartigen Kettenziehmaschine erweist es sich als nachteilig, dass jede der Ziehketten als eine auf eine Rollenkette aufbauende Sonderbauform ausgebildet ist, die in entsprechender Weise konstruktiv sehr aufwendig ist und ein relativ hohes Gewicht aufweist. Das hohe Gewicht begrenzt unter anderem die maximal erreichbare Ziehgeschwindigkeit. Die für den Ziehvorgang erforderlichen Klemm- und Zugkräfte werden soweit wie möglich auf alle Bauteile der Sonderkette, wie äußere Kettenlaschen, Bolzen, Rollenbuchsen, innere Zurückhaltelaschen und Klemmbacken verteilt. Die aus dem Stand der Technik bekannte Sonderziehkette weist auch eine voluminöse Bauform auf, da die Funktion der Übertragung der Zugkräfte von den äußeren Kettenlaschen, Bolzen, inneren Zurückhaltelaschen und Klemmbacken übernommen wird und die Einleitung der Antriebskräfte von den Umlenkrädern über die Rollenbuchsen erfolgt. Des Weiteren bilden bei dieser Kettenziehmaschine die dem Ziehgut abgewandten glatten Abrollflächen der Klemmbacken auf Grund der in Umlaufrichtung der Ziehkette gesehen dazwischen vorhandenen Spalte keine durchgehende Abrollfläche, so dass die einzelnen Rollen des Rollenbandes einer schwellenden Belastung unterworfen sind, die deren Verschleiß fördert.

Außerdem erweist es sich als nachteilig, dass auf Grund von Fertigungstoleranzen bei den Klemmbacken und des Rollenbandes unterschiedliche Klemmkräfte zwischen den jeweils gegenüberliegenden Klemmbacken auftreten können. Dies führt zu unerwünschten Markierungen auf der Oberfläche des Ziehguts oder zum Durchrutschen des Ziehguts. Außerdem begrenzen sowohl die relativ hohen Massen der Ziehketten und der Rollenkette als auch etwaige Führungsprobleme dieser Elemente untereinander die maximal erreichbare Ziehgeschwindigkeit.

Der vorliegenden Erfindung liegt die Aufgabe zugrunde, eine Kettenziehmaschine zum kontinuierlichen Ziehen von Ziehgut, insbesondere stangen- oder rohrförmigen Ziehgut, zu schaffen, deren Ziehkette eine einfache und leichte Bauweise aufweist. Gleichzeitig sollen mit dieser Ziehkette hohe Ziehgeschwindigkeiten erreichbar seien. Auch soll diese Erfindung eine Abstützung der Ziehketten schaffen, die einen Ausgleich von Fertigungstoleranzen bei den Klemmbacken ermöglicht.

Diese Aufgabe wird bei einer Kettenziehmaschine zum kontinuierlichen Ziehen von Ziehgut, insbesondere stangen- oder rohrförmigen Ziehgut, durch die im Anspruch 1 aufgeführten Merkmale gelöst. Vorteilhafte Ausgestaltungen der Erfindung sind in den Unteransprüchen 2 bis 12 angegeben.

Erfindungsgemäß wird bei einer Kettenziehmaschine zum kontinuierlichen Ziehen von Ziehgut, insbesondere stangen- oder rohrförmigen Ziehgut, dadurch erreicht, dass jede Ziehkette aus mindestens zwei Zahnketten gebildet ist, die parallel und mit Abstand zueinander verlaufen und zwischen den Zahnketten die Klemmbacken angeordnet sind, dass die Ziehketten konstruktiv sehr einfach aufgebaut und leicht sind. Auf Grund ihres geringen Gewichtes und demzufolge geringer Massenkräfte sind hohe Ziehgeschwindigkeiten möglich. Bei kleinen Abmessungen des Ziehgutes, d.h. bei einem Durchmesser bis 20 mm, können Ziehgeschwindigkeiten bis zu etwa 800 m/min. erreicht werden. Ziehgut mit mittleren Abmessungen im Durchmesserbereich von 20 bis 50 mm kann etwa 600 m/min. schnell gezogen werden.

Außerdem wird bei diesem Aufbau der Ziehkette eine klare Trennung der Antriebsfunktion der Zahnketten von der Klemmfunktion der Klemmbacken erreicht, die unter anderem ermöglicht, auf Zahnketten in Standardbauweise zurückzugreifen.

In konstruktiv einfacher Weise bestehen die Zahnketten jeweils aus einer Vielzahl von Laschen, die in Umlaufrichtung der Ziehkette gelenkig über bolzenartige Verbindungselemente verbunden sind. Die Laschen der einen Zahnkette sind über ein gemeinsames bolzenartiges Verbindungselement mit den Laschen der benachbarten Zahnketten verbunden und zwischen den Laschen der beiden Zahnketten ist die Klemmbacke auf dem bolzenartigen Verbindungselement angeordnet ist. Jede Klemmbacke ist stabil in Umlaufrichtung der Ziehkette gesehen vorne und hinten an einem bolzenartigen Verbindungselement gelagert. Hierbei wird die Klemmbacke schleppend von den Bolzen der Ziehkette mitgenommen. Die Zugkräfte in Längsrichtung der Ziehkette werden zumindest überwiegend, vorzugsweise vollständig, von den Zahnketten aufgenommen und nicht von den Klemmbacken. Wie bei Zahnketten üblich sind die bolzenartigen Verbindungselemente als Wiegegelenkzapfen ausgebildet. Auch weisen die Zahnketten jeweils üblicherweise eine Mehrzahl von nebeneinander angrenzenden Laschen auf, die jeweils in Umlaufrichtung der Ziehkette gesehen vorne und hinten auf der der Klemmbacke abgewandten Seite zahnartige Vorsprünge aufweisen.

Um das Ziehgut für den Ziehvorgang klemmen zu können, sind die Klemmbacken jeweils an ihrer dem Ziehgut zugewandten Oberfläche mit einer an das Ziehgut angepassten Profilierung versehen, die über die Laschen hervorstehen.

In besonders vorteilhafter Ausgestaltung weisen die Führungselemente für die Ziehketten eine Vielzahl von in Ziehrichtung entlang der Ziehstrecke angeordnete Walzen für die Abstützung der Klemmbacken auf. Diese Walzen sind beidendig jeweils an den Führungselementen drehbar gelagert. Die Führungselemente sind als entlang der Ziehstrecke verlaufende Schienenabschnitte ausgebildet. Somit wird eine reibungsarme Führung der Ziehketten im Bereich der Ziehstrecke erzielt. Darüber hinaus ist die Biegefestigkeit der Walzen so weich gewählt, dass die aus der Klemmkraft resultierende Gegenkraft auf die Klemmbacken eine so große Durchbiegung der Walzen erzeugt, dass fertigungsbedingte Toleranzen der Walze und der Klemmbacken weitestgehend ausgeglichen werden. Somit wird eine besonders gleichmäßige Flächenbelastung des Ziehguts erreicht und ein Durchrutschen des Ziehgutes vermieden. Dieses Merkmal bezüglich der Ausbildung des Führungselementes als eine Art Rollenteppich ist neben der Ausbildung der Ziehkette als Zahnkette von eigenständiger erfinderischer Bedeutung.

Um eine gleichmäßige Führung der Klemmbacken zu erreichen, ist für die Führung der Klemmbacken entlang der anstellbaren Führungselemente die dem Ziehgut abgewandte und als Lauffläche bezeichnete Seite der Klemmbacken weitestgehend eben ausgebildet. Die Lauffläche ragt hierbei über die Laschen der Zahnketten hinaus. Auch wird eine Vergleichmäßigung der Führung, dadurch erreicht, dass der Durchmesser der Walzen in Verbindung mit der Teilung der Ziehkette so gewählt ist, dass mindestens zwei in Ziehrichtung aufeinander folgende Walzen gleichzeitig mit einer Klemmbacke in Kontakt stehen.

In einer bevorzugten Ausführungsform können in Umlaufrichtung der Ziehkette gesehen die Laufflächen der aneinander angrenzenden Enden der Klemmbacken nach Art einer Verzahnung überlappen, so dass eine durchgehende Lauffläche für die Walzen gebildet wird. Hierdurch wird eine besonders gleichförmige Abstützung der Klemmbacken erreicht, die mit einer gleichförmigen Belastung der Walzen einhergeht, die die Lebensdauer der Walzen begünstigt. Dieser zahnartige Ausgestaltung der Laufflächen der Klemmbacken wird eine eigenständige erfinderische Bedeutung beigemessen.

Im Zusammenhang mit der zuvor beschriebenen Trennung der Antriebsfunktion der Zahnketten von der Klemmfunktion der Klemmbacken kann vorgesehen werden, dass im Bereich der Ziehstrecke die Ziehkette ausschließlich über die an die Klemmbacken angreifenden Walzen abgestützt werden. Eine zusätzliche Abstützung der Zahnketten erfolgt dann nicht.

Die Erfindung wird nachfolgend anhand von einem in einer Zeichnung dargestellten Ausführungsbeispiel näher beschrieben. Es zeigen:
- Figur 1: eine schematische Ansicht auf eine Kettenziehmaschine,
- Figur 2: eine vergrößerte Querschnittsansicht der Ziehkette aus dem Bereich eines Führungselementes,
- Figur 3: eine vergrößerte Ansicht von Figur 1 aus dem Bereich eines Umlenkrades für die Ziehkette,
- Figur 4: eine vergrößerte Ansicht von Figur 1 aus dem Bereich der Ziehkette und
- Figur 5: eine Draufsicht auf Figur 4.

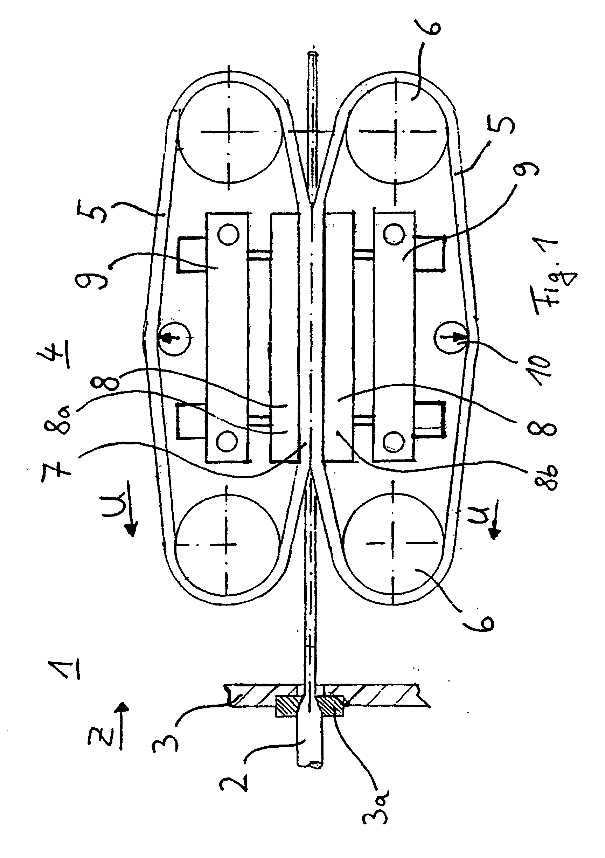

Die Figur 1 zeigt eine schematische Draufsicht auf eine Kettenziehmaschine 1 zum kontinuierlichen Geradeausziehen von Ziehgut 2, vorzugsweise aus Metall, in Form eines Rundprofils. Die Kettenziehmaschine 1 besteht im wesentlichen aus einem einen Ziehstein 3a aufweisenden Ziehwerkzeug 3, das ortfest aber einstellbar an einem nicht dargestellten Maschinenrahmen der Kettenziehmaschine 1 befestigt ist. Das Ziehgut 2 wird zur Querschnittsreduzierung kontinuierlich von einem Ziehaggregat 4 durch das Ziehwerkzeug 3 gezogen. Das Ziehaggregat 4 wendet somit die erforderliche Kraft auf, um das Ziehgut 2 durch das Ziehwerkzeug 3 zu ziehen, und ist ebenfalls ortsfest auf dem nicht dargestellten Maschinenrahmen der Kettenziehmaschine 1 befestigt.

Grundsätzlich gehört zu einer Kettenziehmaschine 1 noch eine nicht dargestellte Einziehvorrichtung, um den Anfang des Ziehguts 2 in das Ziehaggregat 4 zu befördern.

Das Ziehaggregat 4 besteht im wesentlichen aus zwei in einer Ebene spiegelbildlich angeordneten Ziehketten 5, die endlos umlaufend jeweils um zwei in Ziehrichtung Z voneinander beabstandete Umlenkräder 6 geführt sind. Die Umlenkräder 6 sind jeweils um quer zur Ziehrichtung Z ausgerichtete Achsen an dem Maschinenrahmen gelagert, von denen je Ziehkette 5 das in Ziehrichtung Z hintere Umlenkrad 6 angetrieben ist. Das hintere Umlenkrad 6 ist vorzugsweise an dem Maschinenrahmen so gelagert, da dieses nicht in Ziehrichtung Z zugestellt werden kann. In einem als Ziehstrecke 7 bezeichneten Bereich der Ziehketten 5 verlaufen die Ziehketten 5 parallel zueinander sowie in Ziehrichtung Z und werden an deren voneinander abgewandten Rückseiten jeweils von einem Führungselement 8 unterstützt, um somit das Ziehgut 2 zwischen den Ziehketten 5 im Bereich der Ziehstrecke 7 einzuklemmen und mitzunehmen. Die aufgebrachte Klemmkraft ist jeweils auf den Mittelpunkt des Ziehgutes 2 gerichtet und die beiden Ziehketten 5 werden so gegeneinander verspannt.

Das Führungselement 8 ist jeweils als gerader Schienenabschnitt 8a, 8b ausgebildet, der im wesentlichen über eine sich am Maschinenrahmen abstützende Anstellvorrichtung 9, vorzugsweise linear in Richtung des Ziehguts 2 und somit quer zur Ziehrichtung Z, zur Einstellung der Klemmkraft anstellbar ist. Vorzugsweise wird hierbei von der Anstellvorrichtung 9 der eine Schienenabschnitt 8a gegen einen nicht dargestellten Anschlag gefahren und die gegenüberliegende Ziehkette 5 von dem anderen Schienenabschnitt 8b in einem Druckpolster gegen die erste Ziehkette 5 gedrückt. Zusätzlich wird jede umlaufende Ziehkette 5 noch über eine Spannrolle 10 vorgespannt, die an dem dem Führungselement 8 gegenüberliegenden Trum der Ziehkette 5 angreift.

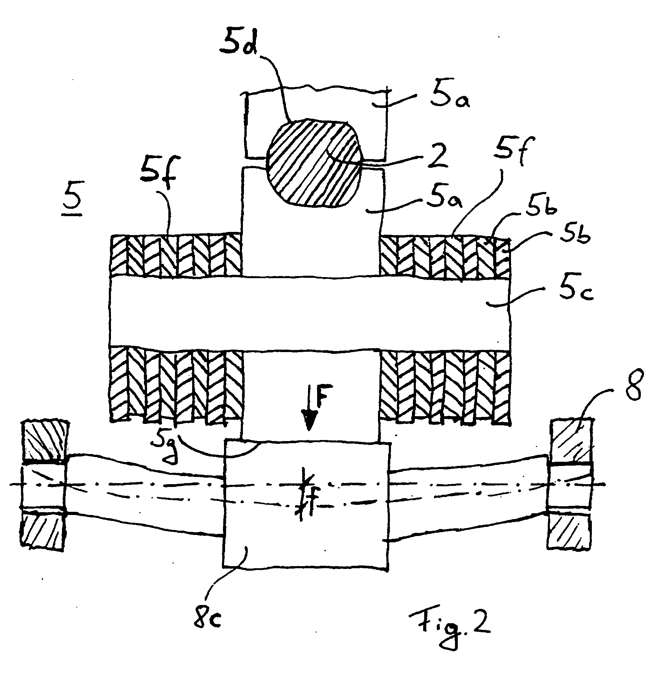

In der Figur 2 ist eine vergrößerte Querschnittsansicht der Ziehkette 5 im Bereich eines Führungselementes 8 dargestellt. Es ist ersichtlich, dass die Ziehkette 5, aus Klemmbacken 5a, Laschen 5b und bolzenartigen Verbindungselementen 5c besteht. Dem Aufbau der Ziehkette 5 entsprechend kann die Ziehkette 5 auch als Raupenkette bezeichnet werden.

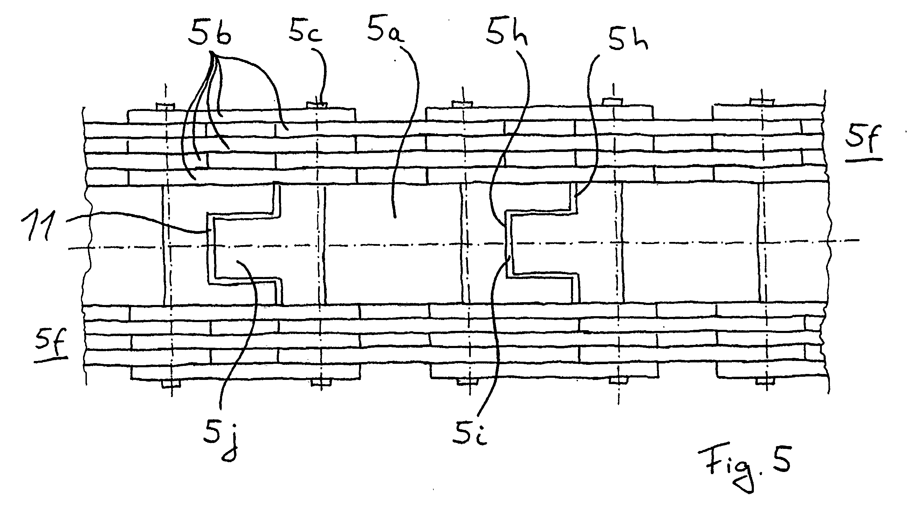

Die Klemmbacken 5a für das Ziehgut 2 weisen jeweils auf der dem Führungselement 8 abgewandten Seite eine Profilierung 5d, die an die Außenkontur des zu ziehenden Ziehguts 2 angepasst ist. Die dem Führungselement 8 zugewandte und als Lauffläche 5g bezeichnete Seite ist eben ausgebildet, so dass im Bereich der Ziehstrecke 7 eine soweit wie möglich durchgehende - abgesehen von den Spalten 11 (siehe Figur 5) zwischen den einzelnen Klemmbacken 5a, die für die Umlenkung der Ziehkette 5 erforderlich sind - Auflagefläche gebildet wird, über die die Klemmbacken 5a von dem Führungselement 8 abgestützt werden. Die Ausgestaltung der Spalte 11 zwischen den Klemmbacken 5a wird später mit Bezug auf die Figur 5 näher erläutert. Durch die ebene Lauffläche 5g wird eine weitestgehend gleichmäßige Klemmkraft erzielt. Jede Klemmbacke 5a ist jeweils an ihrem vorderen und hinteren Ende über ein bolzenartiges Verbindungselement 5c mit den Laschen 5b verbunden. Die Klemmbacke 5a übertragt hierbei keine Zugkräfte sondern wird nur schleppend von den Bolzen 5c mitgenommen. Außerdem ragt jede Klemmbacke 5a über die Laschen 5b in Richtung des Ziehguts 2 hervor.

Die jeweils seitlich neben den Klemmbacken 5a angeordneten Laschen 5b sind Bestandteile von Zahnketten 5f, so dass die Ziehkette 5 im wesentlichen aus zwei Strängen von Zahnketten 5f besteht, zwischen denen die Klemmbacken 5a über die bolzenartigen Verbindungselemente 5c gelagert sind. Die während des Ziehvorganges auftretenden Zugkräfte werden von den beiden Zahnketten 5f aufgenommen. Über diese Zahnketten 5f werden auch die Antriebskräfte von den Umlenkrädern 6 eingeleitet. Die Umlenkräder 6 besitzen eine mittige Aussparung in der sich die Klemmbacke 5a zentriert, während die Zahnketten 5f mit dem Umlenkrad 6 kämmt.

Über die quer zur Ziehrichtung Z ausgerichteten bolzenartigen Verbindungselemente 5c sind die einander angrenzenden Laschen 5b der Ziehkette gelenkig miteinander verbunden. Außerdem sind auf jedem bolzenartigen Verbindungselement 5c nebeneinander die Laschen 5b der ersten Zahnkette 5f gefolgt von der Klemmbacke 5a und den Laschen 5b der zweiten Zahnkette 5f angeordnet.

Des Weiteren zeigt die Figur 2, dass das Führungselement 8 im Bereich seiner Stützfläche für die Ziehkette 5 eine Vielzahl von in Ziehrichtung Z hintereinander angeordnete Walzen 8c aufweist (siehe auch Figur 5). Die Walzen 8c sind beidendig an dem Führungselement 8 drehend gelagert und bilden somit eine Art Rollenteppich. Die Längsachse der Walzen 8c ist hierbei jeweils quer zur Ziehrichtung Z ausgerichtet. Um die Klemmkraft auf das Ziehgut 2 aufzubringen, werden die gegenüberliegenden Führungselemente 8 und somit die Walzen 8c, die auf die rückseitigen Laufflächen 5g der Klemmbacken 5a der Ziehketten 5 wirken, über die Anstellvorrichtungen 9 jeweils in Richtung des Mittelpunkt des Ziehguts 2 gegeneinander verspannt. Hierbei ist der Lagerabstand der Walzen 8c und deren Biegefestigkeit so gewählt, dass die aus der Klemmkraft resultierende Gegenkraft F auf die Klemmbacken 5a eine so große Biegung f der Walzen 8c erzeugt, dass fertigungsbedingte Toleranzen der Walze 8c und der Klemmbacken 5a, welche zu fehlendem oder mangelhaftem Kontakt der Klemmbacke 5a mit dem Ziehgut 2 führen kann, durch die Federspannung der gebogenen Walze 8c weitestgehend ausgeglichen wird. Die Durchbiegung f liegt im Bereich von 0,01 mm bis 0,1 mm. Der Durchmesser der Walzen 8c ist in Verbindung mit der Teilung der Ziehkette 5 so gewählt, dass mindestens zwei Walzen 8c gleichzeitig mit einer Klemmbacke 5a in Kontakt stehen. Auch hierdurch wird die Klemmkraft vergleichmäßigt.

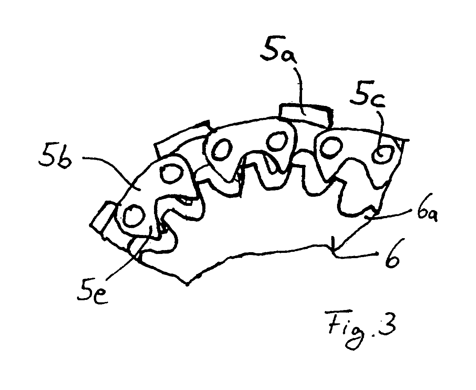

In der Figur 3 ist eine vergrößerte Ansicht von Figur 1 aus dem Bereich eines Umlenkrades 6 für die Ziehkette 5 dargestellt. Es ist ersichtlich, dass die Laschen 5b - wie bei einer Zahnkette 5f üblich - im Bereich der bolzenartigen Verbindungselemente 5c an deren Innenseite hervorstehende Zähne 5e aufweist, die mit Zähnen 6a der Umlenkräder 6 kämmen.

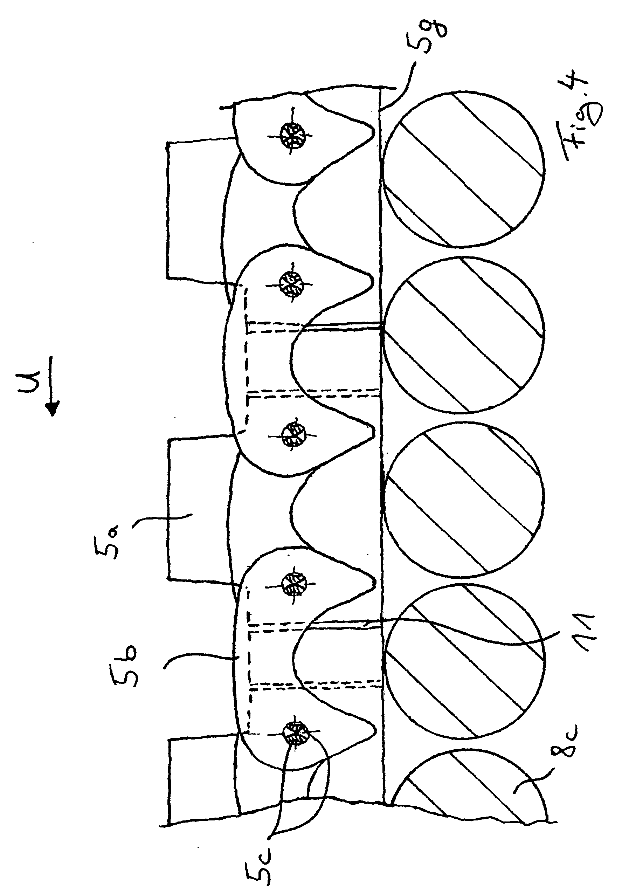

Die Figur 4 zeigt eine vergrößerte Ansicht von Figur 1 aus dem Bereich der Ziehkette 5. Es ist ersichtlich, dass die bolzenartigen Verbindungselemente 5c - wie bei Zahnketten 5f üblich - als aufeinanderstehende halbkreis- und keilförmige Wiegegelenkzapfen ausgebildet sind, die bei einer Winkelbewegung zweier benachbarter Laschen 5b aneinander abrollen. Die Wiegegelenkzapfen sind hierbei jeweils formschlüssig mit einer der beiden aneinander angrenzenden Laschen 5b verbunden.

Auch ist aus der Figur 4 ersichtlich, dass auf Grund des gewählten Durchmessers der Walzen 8c in Verbindung mit der Teilung der Ziehkette 5 drei in Umlaufrichtung U der Ziehkette 5 gesehen aufeinander folgende Walzen 8c jeweils mit der Lauffläche 5g einer Klemmbacke 5a in Verbindung stehen.

Ferner ist im Zusammenhang mit der Figur 4 zu erwähnen, dass die Klemmbacken 5a in Bezug auf die Übertragung der Antriebskräfte von den Umlenkrädern 6 auf die Ziehkette 5 und der Ableitung der Ziehkräfte in Längsrichtung der Ziehkette 5 nicht der Ziehkette 5 zu zurechnen sind, sondern nur von den beiden Zahnketten 5f für die Ausübung der Ziehbewegung schleppend mitgenommen werden. Die Klemmbacken 5a dienen nicht zur Übertragung von Zugkräften.

In der Figur 5, die eine Draufsicht von Figur 4 darstellt, ist gezeigt, dass die Klemmbacken 5a zumindest im Bereich Ihrer Lauffläche 5g und an ihren in Umlaufrichtung U gesehen aneinander grenzenden Enden 5h durch einen Spalt 11 getrennt sind. Die Enden 5h sind zahnartig profiliert als in Umlaufrichtung U gesehen ineinander greifende u-förmige Ausnehmungen 5i und Zapfen 5j ausgebildet, so dass der Spalt 11 zwischen den Klemmbacken 5a nicht mehr über die gesamte Breite der Walze 8c quer zur Umlaufrichtung U der Ziehkette 5 verläuft. Hierdurch wird erreicht, dass trotz des Spaltes 11 die Laufflächen 5g zweier aneinander angrenzender Klemmbacken 5a in Umlaufrichtung U der Ziehkette 5 gesehen überlappen und somit die Walze 8c kontinuierlich in Kontakt mit den Laufflächen 5g der Klemmbacken 5a steht.

Ferner ist eine nicht dargestellte Schnellwechselvorrichtung für die Ziehketten 5 vorgesehen, um bei einer Umrüstung der Kettenziehmaschine zum Ziehen eines anderen Profils nicht nur die Klemmbacken 5a sondern die gesamte Ziehkette 5 auszutauschen. Dies ist besonders zeitsparend und somit wirtschaftlich.

Das zuvor beschriebene Ausführungsbeispiel bezieht sich zwar auf eine Kettenziehmaschine 1 mit zwei in einer Ebene angeordneten Ziehketten 5, jedoch ist das Prinzip der vorliegenden Erfindung auch auf Kettenziehmaschinen 1 mit mehr als zwei Ziehketten 5 anwendbar.

### Bezugszeichenliste

- 1: Kettenziehmaschine
- 2: Ziehgut
- 3: Ziehwerkzeug
- 3a: Ziehstein
- 4: Ziehaggregat
- 5: Ziehkette
- 5a: Klemmbacken
- 5b: Laschen
- 5c: Bolzen
- 5d: Profilierung
- 5e: Zähne
- 5f: Zahnkette
- 5g: Lauffläche
- 5h: Enden
- 5i: Ausnehmung
- 5j: Zapfen
- 6: Umlenkräder
- 6a: Zähne
- 7: Ziehstrecke
- 8: Führungselement
- 8a: Schienenabschnitt
- 8b: Schienenabschnitt
- 8c: Walze
- 9: Anstellvorrichtung
- 10: Spannrolle
- 11: Spalt
- f: Durchbiegung
- F: Gegenkraft
- U: Umlaufrichtung
- Z: Ziehrichtung

## Patentansprüche

1. Kettenziehmaschine (1) zum kontinuierlichen Ziehen von Ziehgut (2), insbesondere stangen- oder rohrförmigen Ziehgut, mit einem Ziehwerkzeug (3) und mit einer dem Ziehwerkzeug zugeordneten Ziehaggregat (4), das mindestens zwei endlos umlaufende, antreibbare und mit Klemmbacken (5a) für das Ziehgut versehene Ziehketten (5) aufweist, die zum Ergreifen des Ziehgutes (2) über Führungselemente (8) gegeneinander anstellbar sind und somit eine Ziehstrecke (7) für das Ziehgut (2) bilden,
**dadurch gekennzeichnet,**
**dass** jede Ziehkette (5) aus mindestens zwei Zahnketten (5f) gebildet ist, die parallel und mit Abstand zueinander verlaufen und zwischen den Zahnketten (5f) die Klemmbacken (5a) angeordnet sind.

2. Kettenziehmaschine nach Anspruch 1, **dadurch gekennzeichnet, dass** die Zahnketten (5f) jeweils aus einer Vielzahl von Laschen (5b) bestehen, die in Umlaufrichtung (U) der Ziehkette (5) gelenkig über bolzenartige Verbindungselemente (5c) verbunden sind und über ein gemeinsames bolzenartiges Verbindungselement (5c) die Laschen (5b) der benachbarten Zahnketten (5f) verbunden sind und zwischen den Laschen (5b) der Zahnketten (5f) die Klemmbacke (5a) auf dem bolzenartigen Verbindungselement (5c) angeordnet ist.

3. Kettenziehmaschine nach Anspruch 2, **dadurch gekennzeichnet**, jede Klemmbacke (5a) in Umlaufrichtung (U) der Ziehkette (5) gesehen vorne und hinten an einem Bolzen (5c) gelagert ist und vorzugsweise überwiegend schleppend von der Ziehkette (5) mitgenommen wird.

4. Kettenziehmaschine nach Anspruche 2 oder 3, **dadurch gekennzeichnet, dass** die Bolzen (5c) als Wiegegelenkzapfen ausgebildet sind.

5. Kettenziehmaschine nach einem der Ansprüche 1 bis 4, **dadurch gekennzeichnet, dass** die Zahnketten (5f) jeweils eine Mehrzahl von nebeneinander angrenzenden Laschen (5b) aufweisen, die jeweils in Umlaufrichtung (U) der Ziehkette (5) gesehen vorne und hinten - wie bei einer Zahnkette (5f) üblich - an deren Innenseite hervorstehende Zähne (5e) aufweisen.

6. Kettenziehmaschine nach einem der Ansprüche 1 bis 5, **dadurch gekennzeichnet, dass** die Klemmbacken (5a) jeweils an ihrer dem Ziehgut (2) zugewandten Oberfläche eine an das Ziehgut (2) angepasste Profilierung (5d) aufweisen, die über die Laschen (5b) hervorstehen.

7. Kettenziehmaschine nach einem der Ansprüche 1 bis 6, **dadurch gekennzeichnet, dass** die Führungselemente (8) eine Vielzahl von in Ziehrichtung (Z) entlang der Ziehstrecke (7) angeordneten Walzen (8c) für die Abstützung der Klemmbacken (5a) an ihrer Lauffläche (5g) aufweisen, die beidendig an dem schienenförmig ausgebildeten und entlang der Ziehstrecke (7) verlaufenden Schiene der Führungselemente (8) drehbar gelagert sind.

8. Kettenziehmaschine nach Anspruch 7, **dadurch gekennzeichnet, dass** die Biegefestigkeit der Walzen (8c) so gewählt, dass die aus der Klemmkraft resultierende Gegenkraft (F) auf die Klemmbacken (5a) eine so große Durchbiegung (f) der Walzen (8a) erzeugt, dass fertigungsbedingte Toleranzen der Walze (8a) und der Klemmbacken (5a) weitestgehend ausgeglichen werden.

9. Kettenziehmaschine nach einem der Ansprüche 1 bis 8, **dadurch gekennzeichnet, dass** die dem Ziehgut (2) abgewandte Lauffläche (5g) der Klemmbacken (5a) weitestgehend eben ausgebildet ist.

10. Kettenziehmaschine nach einem der Ansprüche 7 bis 9, **dadurch gekennzeichnet, dass** der Durchmesser der Walzen (8a) in Verbindung mit der Teilung der Ziehkette (5) so gewählt ist, dass mindestens zwei in Ziehrichtung (Z) aufeinander folgende Walzen (8c) gleichzeitig mit einer Klemmbacke (5a) in Kontakt stehen.

11. Kettenziehmaschine nach einem der Ansprüche 7 bis 10, **dadurch gekennzeichnet, dass** in Umlaufrichtung (U) der Ziehkette (5) gesehen die Laufflächen (5g) der aneinander angrenzenden Enden (5h) zur Bildung einer durchgehenden Lauffläche (5g) für die Walzen (8c) überlappen.

12. Kettenziehmaschine nach einem der Ansprüche 7 bis 11, **dadurch gekennzeichnet, dass** im Bereich der Ziehstrecke (7) die Ziehkette (5) ausschließlich über die an die Klemmbacken (5a) angreifenden Walzen (8c) abgestützt sind.

## Claims

1. Chain drawing machine (1) for continuously drawing drawn material (2), in particular bar-like or tube-like drawn material, having a drawing tool (3) and having a drawing unit (4) which is allocated to the drawing tool and comprises at least two continuously circulating drawing chains (5) which can be driven, are provided with clamping jaws (5a) for the drawn material and can be adjusted with respect to each other via guide elements (8) for grasping the drawn material (2) and consequently form a drawing path (7) for the drawn material (2),
**characterised in that**
each drawing chain (5) is formed from at least two toothed chains (5f) which extend in parallel with each other and at a spaced interval from each other and the clamping jaws (5a) are disposed between the toothed chains (5f).

2. Chain drawing machine as claimed in Claim 1, **characterised in that** the toothed chains (5f) consist in each case of a plurality of cover plates (5b) which are hinged in the rotational direction (U) of the drawing chain (5) via pin-like connecting elements (5c) and the cover plates (5b) of the adjacent toothed chains (5f) are connected via a common pin-like connecting element (5c) and the clamping jaw (5a) is disposed on the pin-like connecting element (5c) between the cover plates (5b) of the toothed chains (5f).

3. Chain drawing machine as claimed in Claim 2, **characterised in that** each clamping jaw (5a) is mounted on a pin (5c) at the front and rear as seen in the rotational direction (U) of the drawing chain (5) and is preferably taken along by the drawing chain (5) in a substantially dragging manner.

4. Chain drawing machine as claimed in Claims 2 or 3, **characterised in that** the pins (5c) are formed as cradle type joint pins.

5. Chain drawing machine as claimed in any one of Claims 1 to 4, **characterised in that** the toothed chains (5f) comprise in each case a plurality of cover plates (5b) which lie adjacent each other and comprise in each case teeth (5e) protruding on the inner side thereof at the front and rear as seen in the rotational direction (U) of the drawing chain (5e) - as is conventional in a toothed chain (5f).

6. Chain drawing machine as claimed in any one of Claims 1 to 5, **characterised in that** the clamping jaws (5a) in each case have a profiled shape (5d) on their surface facing the drawn material (2) which is adapted to the drawn material (2) and protrudes over the cover plates (5b).

7. Chain drawing machine as claimed in any one of Claims 1 to 6, **characterised in that** the guide elements (8) comprise a plurality of rollers (8c) disposed along the drawing path (7) in the drawing direction (Z) for supporting the clamping jaws (5a) on their running surface (5g) which are mounted at both ends so as to be able to rotate on the rail of the guide elements (8) extending along the drawing path (7) and formed in a rail-like manner.

8. Chain drawing machine as claimed in Claim 7, **characterised in that** the flexural strength of the rollers (8c) is chosen in such a manner that the counterforce (F) on the clamping jaws (5a) arising from the clamping force causes the rollers (8a) to bend to such an extent that production tolerances of the rollers (8a) and of the clamping jaws (5a) are substantially compensated.

9. Chain drawing machine as claimed in any one of Claims 1 to 8, **characterised in that** the running surface (5g) of the clamping jaws (5a) remote from the drawn material (2) is formed substantially planar.

10. Chain drawing machine as claimed in any one of Claims 7 to 9, **characterised in that** the diameter of the rollers (8a) is chosen in connection with the pitch of the drawing chain (5) in such a manner that at least two rollers (8c) following each other in the drawing direction (Z) are simultaneously in contact with a clamping jaw (5a).

11. Chain drawing machine as claimed in any one of Claims 7 to 10, **characterised in that** as seen in the rotational direction (U) of the drawing chain (5) the running surfaces (5g) of the ends (5h) lying adjacent each other overlap to form a continuous running surface (5g) for the rollers (8c).

12. Chain drawing machine as claimed in any one of Claims 7 to 11, **characterised in that** in the region of the drawing path (7) the drawing chain (5) is supported exclusively by the rollers (8c) acting upon the clamping jaws (5a).

## Revendications

1. Machine à étirer à chaînes (1) pour l'étirage continu de produit à étirer (2), notamment de produit à étirer en forme de barres ou de tubes, avec un outil d'étirage (3) et avec un agencement d'étirage (4) associé audit outil d'étirage, lequel présente au moins deux chaînes d'étirage sans fin (5), qui peuvent être entraînées et sont pourvues de mâchoires de serrage (5a), qui, pour saisir le produit à étirer, sont réglables, l'une par rapport à l'autre, par l'intermédiaire d'éléments de guidage (8) et forment ainsi un parcours d'étirage (7) pour le produit à étirer (2),
**caractérisée en ce que**
chaque chaîne d'étirage (5) est composée d'au moins deux chaînes dentées (5f) qui sont orientées parallèlement, à distance l'une de l'autre, et que les mâchoires de serrage (5a) sont disposées entre lesdites chaînes dentées (5f).

2. Machine à étirer à chaînes selon la revendication 1, **caractérisée en ce que** les chaînes dentées (5f) sont composées chacune d'un grand nombre de maillons (5b) qui sont reliés, articulés, dans le sens de défilement (U) de la chaîne d'étirage (5), par l'intermédiaire d'éléments de liaison en forme de chevilles (5c) et que les maillons (5b) des chaînes dentées (5f) voisines sont reliés par l'intermédiaire d'un élément de liaison commun (5c) et qu'entre les maillons (5b) des chaînes dentées (5f), la mâchoire de serrage (5a) est disposée sur l'élément de liaison en forme de cheville (5c).

3. Machine à étirer à chaînes selon la revendication 2, **caractérisée en ce que** chaque mâchoire de serrage (5a), vue dans le sens de marche (U) de la chaîne d'étirage (5), est montée, en avant et en arrière, sur une cheville (5c) et est entraînée, préférentiellement, de manière essentiellement traînée par la chaîne d'étirage (5).

4. Machine à étirer à chaînes selon la revendication 2 ou 3, **caractérisée en ce que** les chevilles (5c) sont conçues en tant qu'articulations à bascule.

5. Machine à étirer à chaînes selon l'une des revendications 1 à 4, **caractérisée en ce que** les chaînes dentées (5f) présentent, chacune, plusieurs maillons (5b) adjacents, qui, vus dans le sens de défilement (U) de la chaîne d'étirage (5), présentent chacun, en avant et en arrière - comme habituel pour une chaîne dentée (5f) -, des dents (5e) en saillie sur leur surface intérieure.

6. Machine à étirer à chaînes selon l'une des revendications 1 à 5, **caractérisée en ce que** les mâchoires de serrage (5a) présentent chacune, sur leur surface orientée vers le produit à étirer (2), un profil (5d) adapté au produit à étirer (2), qui fait saillie au-dessus des maillons (5b).

7. Machine à étirer à chaînes selon l'une des revendications 1 à 6, **caractérisée en ce que** les éléments de guidage (8) présentent un grand nombre de rouleaux (8c), disposés le long du parcours d'étirage (7), dans le sens d'étirage (Z), pour soutenir les mâchoires de serrage (5a) sur leur surface de roulement (5g), lesquels sont montés, aux deux extrémités, au rail des éléments de guidage (8) s'étendant le long du parcours d'étirage (7).

8. Machine à étirer à chaînes selon la revendication 7, **caractérisée en ce que** la résistance à la flexion des rouleaux (8c) est sélectionnée de sorte que la force antagoniste (F), résultant de la force de serrage, exercée sur les mâchoires de serrage (5a) génère une flexion (f) desdits rouleaux (8a) si grande que les tolérances des rouleaux (8a) et des mâchoires de serrage (5a), conditionnées par la fabrication, sont essentiellement compensées.

9. Machine à étirer à chaînes selon l'une des revendications 1 à 8, **caractérisée en ce que** la surface de roulement (5g) des mâchoires de serrage (5a) opposée au produit à étirer (2) est de conception essentiellement plane.

10. Machine à étirer à chaînes selon l'une des revendications 7 à 9, **caractérisée en ce que** le diamètre des rouleaux (8a) est sélectionné en relation avec la division de la chaîne d'étirage (5) de sorte qu'au moins deux rouleaux (8c), se suivant l'un l'autre, dans le sens d'étirage (Z), se trouvent simultanément en contact avec une mâchoire de serrage (5a).

11. Machine à étirer à chaînes selon l'une des revendications 7 à 10, **caractérisée en ce que**, vues dans le sens de défilement (U) de la chaîne d'étirage (5), les surfaces de roulement (5g) des extrémités adjacentes (5h) se chevauchent pour former une surface de roulement continue (5g) pour les rouleaux (8c).

12. Machine à étirer à chaînes selon l'une des revendications 7 à 11, **caractérisée en ce que**, dans la zone du parcours d'étirage (7), les chaînes d'étirage (5) sont soutenues exclusivement par l'intermédiaire des rouleaux (8c) qui attaquent les mâchoires de serrage (5a).
